# EUROPÄISCHE PATENTSCHRIFT

(11) **EP 0 834 534 B1**
(45) Veröffentlichungstag und Bekanntmachung des Hinweises auf die Patenterteilung: **07.11.2001**
(21) Anmeldenummer: 97114928.1
(22) Anmeldetag: 28.08.1997
(51) Int. Cl.: C08L 83/04, C08K 5/36, C08K 5/37, C08K 5/54

(54) **Flüssigsiliconkautschuk mit reduziertem Druckverformungsrest**
Liquid silicone rubber composition with reduced compression set
Caoutchouc de silicone liquide à déformation permanente réduite

(30) Priorität: 29.08.1996 DE 19634971
(43) Veröffentlichungstag der Anmeldung: 08.04.1998
(73) Patentinhaber: Wacker-Chemie GmbH, 81737 München (DE)
(72) Erfinder: Kovar, Ingomar, Dr., 84489 Burghausen (DE); Kammerer, Johann, 84387 Julbach (DE); Matejcek, Klaus-Michael, Dr., 84489 Burghausen (DE); Bosch, Erhard, Dr., 84543 Winhoering (DE); Strassberger, Walter, Dr., 84503 Altoetting (DE)
(74) Vertreter: Deffner-Lehner, Maria, Dr.

(56) Entgegenhaltungen:
- EP-A- 0 006 172
- EP-A- 0 377 185
- EP-A- 0 384 325
- EP-A- 0 654 497
- US-A- 5 104 919
- US-A- 5 153 244
- PATENT ABSTRACTS OF JAPAN vol. 17, no. 274 (C-1064), 27.Mai 1993 & JP 05 009388 A (TORAY DOW CORNING SILICONE CO.LTD.), 19.Januar 1993,

## Beschreibung

Die Erfindung betrifft zu Elastomeren vernetzende Massen, ein Verfahren zu ihrer Herstellung und Formkörper, die aus diesen Massen hergestellt werden.

Zu Elastomeren vernetzende Massen, die einen niedrigen Druckverformungsrest haben sollen, sind bereits beschrieben.

Aus der DE 41 00 217 (Degussa AG) ist für peroxidisch unter Wärmeeinwirkung vulkanisierbare Formmassen bekannt, daß Thiocyanatopropyltrialkoxysilane eine Verbesserung des Druckverformungsrestes bewirken können. Hierbei wird beschrieben, daß die Organosiliciumverbindungen getrennt oder umgesetzt mit einem Füllstoff verwendet werden können. Ebenfalls bekannt aus DE 33 19 251 (Degussa AG) ist für vulkanisierbare Halogenkautschukmischungen der Einsatz von Isothiuroniumverbindungen anstelle von Thioharnstoffderivaten. Für die erhaltenen Vulkanisate werden gegenüber vergleichbaren Halogenkautschukverbindungen ohne Isothiuroniumverbindungen verbesserte Werte in Bezug auf Festigkeit, Spannungswert, Abrieb und Druckverformungsrest festgestellt.
In EP 0 278 157 (Shin Etsu Chemical Co., Ltd.) sind mit organischen Schwefelverbindungen oder mit organischen Peroxiden vulkanisierbaren Kautschuken thiocarbamylfunktionelle Organosilane zur Verbesserung des Druckverformungsrestes zugesetzt.

Andere Vorschläge zur Verbesserung des Druckverformungsrestes basieren auf der Verwendung von Zusätzen wie z.B. Bariumperoxid, Bariumoxid oder Magnesiumoxid (US-PS 3 261 801, US-PS 3 468 838 und US-PS 3 865 778) und der Anwendung von Polycarbodiimid-Polysiloxan-Mischpolymeren (EP 0 010 708), die zu stark gefärbten Produkten führen.

Die vorgenannten Verfahren zur Verbesserung des Druckverformungsrestes beziehen sich auf Kautschuke, die mittels organischer Schwefelverbindungen oder mittels organischer Peroxide zu Elastomeren vernetzbar sind.

Organopolysiloxanmassen, die durch eine Additionsreaktion, bevorzugt durch eine Hydrosilylierungsreaktion von vinylhaltigen Siloxanen, zur Vernetzung gebracht werden, werden dagegen durch eine Reihe von Platinverbindungen katalysiert. Zur Verbesserung des Druckverformungsrestes sind für additionsvernetzende Systeme bisher Eisen-Mangan-Spinelle der empirischen Formel Fe_{y}Mn_{z}O₄ beschrieben (Wacker Silicones: EP 582 299), Triazol-Verbindungen (Shin Etsu Chemical Co., Ltd.: US 510 49 19), vinyl-spezifische organische Peroxide > 0.2 Gew.% (Dow Corning Co.: EP 0 377 185) und Übergangsmetallchalkogenide (Bayer AG: EP 0 455 078).

In EP 384 325 wird eine Organopolysiloxanzusammensetzung beschrieben, die (A) ein Organopolysiloxan , das zumindest zwei aliphatische ungesättigte Reste, die an verschiedene Siliciumatome pro Molekül gebunden sind, (B) eine organische Siliciumverbindung, die zumindest zwei =SiH Bindungen pro Molekül, (C) einen Platinkatalysator und (D) ein Isothiocyanatderivat aufweist.

In EP 654 497 wird eine Zusammensetzung beschrieben, die (A) eine Organopoylsiloxanverbindung, ein (B) Organohydrogenpoylsiloxan, (C) einen Platinkatalysator und (D) ein Triazin-Kontrollmitttel aufweist.

EP 0 006 172 beschreibt Organopoylsiloxanmassen, welche durch Anlagerung an Si-gebundenem Wasserstoff an aliphatische Mehrfachbindungen mit einem Platinkatalysator und unter Zusatz einer Dithiocarbaminsäure, einem Dithiocarbmylsulfenamid, einem Thiurammonosulfid, einem Thiruramidsulfid und einem Mercaptobenzthiazol härtbar sind.

EP 276 831 beschreibt einen Sliconkautschuk, der erhalten wird in der Anwesenheit von Platin-enthaltendem Katalysator, einem Organopoylsiloxan und einem Organohydrogenpoylsiloxan, wobei der gehärtete Kautschuk eine Härte von 10 bis 70 auf der A-Skala gemäß japanischem Industriestandard C2123 aufweist.

Die vorgenannten Massen haben den Nachteil, daß sie keine additionsvernetzenden Massen zur Verfügung stellen, die transparent sind und einen geringen Druckverformungsrest haben.

Aufgabe der Erfindung ist es, Massen zur Verfügung zu stellen, die keine Spaltprodukte, wie peroxidisch vernetzende Systeme aufweisen und viskoser als solche sind und einen geringen Druckverformungsrest bei gleichzeitiger hoher Reproduzierbarkeit derselben nach Lagerung zur Verfügung zu stellen.

Gegenstand der Erfindung sind zu Elastomeren vernetzende Massen auf der Basis von
Komponente (A), enthaltend Polyorganosiloxan (I) mit mindestens zwei Alkenylgruppen pro Molekül und einen metallischen Katalysator (IV)
und
Komponente (B), enthaltend Polyorganosiloxan (II) mit mindestens zwei siliciumgebundenen Wasserstoffatomen und organischer Schwefelverbindung (III),
aus der Gruppe Alkyllthiole, Arylthiole, Mercaptoheterocyclen, Keten-S, X-acetale, mit X bevorzugt gleich N oder S, Thioacetale, Thioamide, Thioharnstoffe, Thiuramdi- oder polysulfide, Bisthiocarbamoylmono-, di- oder polysulfane, Thiuroniumsalze, Thiocarbamate, Dithiocarbamate und deren Zn-, Fe-, Ni-, Co-, Cu-Salze, Thiocyanate, Isothiocyanate, Thiocarbonylverbindungen, Thia-Heterocyclen, die Gegenwart eines Silans mit schwefelhaltigen funktionellen Gruppen, Fülltoffe, auf denen diese Silane mit schwefelhaltigen funktionellen Gruppen aufgebracht, umgesetzt oder abgemischt, wurden oder die Gegenwart eines thiofunktionellen Siloxans und Gemische dieser organischen Schwefelverbindungen.
Komponente (A) enthält Polyorganosiloxan (I). Polyorganosiloxan (I) der erfindungsgemäßen Siliconkautschukmassen ist ein mindestens zwei Alkenylgruppen pro Molekül enthaltendes

Polyorganosiloxan mit einer Viskosität bei 25°C im Bereich von vorzugsweise 0,5 bis 500 Pa^{.}s, bevorzugt von 1 bis 100 Pa^{.}s und besonders bevorzugt 7 bis 25 Pa·s. Polyorganosiloxan (I) wird in Mengen, die vorzugsweise zwischen 10-98 Gew.% und bevorzugt zwischen 20-80 Gew.% und besonders bevorzugt zwischen 50-80 Gew.% liegen, eingesetzt.

Komponente (A) kann auch noch weitere Zusätze, wie unten aufgeführt, enthalten.

Komponente (B) enthält Polyorganosiloxan (II), eine organische Schwefelverbindung (III) und kann auch noch Polyorganosiloxan (I) zusätzlich sowie weitere Zusätze, wie unten aufgeführt, enthalten.

Polyorganosiloxan (II) der erfindungsgemäßen Siliconkautschukmassen ist ein mindestens zwei Si-H Gruppen pro Molekül enthaltendes Polyorganosiloxan mit einer Viskosität bei 25°C im Bereich von vorzugsweise 100 bis 1000 mPa·s, besonders bevorzugt von 200 bis 500 mPa·s.

Das Polyorganosiloxan (I) ist aufgebaut aus Einheiten der Formel

RₐR¹ _{b}SiO_{(4-a-b)/2,}

wobei a 0, 1 oder 2 ist, b 0, 1, 2 oder 3 ist, mit der Maßgabe, daß mindestens zwei Reste R in jedem Molekül vorhanden sind und die Summe (a+b) < 4 ist.

R stellt eine Alkenylgruppe dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

R¹ stellt einen substituierten oder nichtsubstituierten, aliphatisch gesättigten oder aromatischen, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen, gebunden sein.

Polyorganosiloxan (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear oder auch verzweigt sein. Verzweigte Polyorganosiloxane enthalten neben monofunktionellen Einheiten, wie RR¹₂SiO_{1/2} und R¹₃SiO_{1/2}, und difunktionellen Einheiten, wie R¹ ₂SiO_{2/2} und RR¹SiO_{2/2}, auch trifunktionelle Einheiten, wie R¹SiO_{3/2} und RSiO_{3/2}, und/oder tetrafunktionelle Einheiten der Formel SiO_{4/2}, wobei R und R¹ die oben dafür angegebene Bedeutung haben. Der Gehalt an diesen zu verzweigten Polyorganosiloxanen führenden tri- und/oder tetrafunktionellen Einheiten sollte 20 Mol-% nicht wesentlich überschreiten. Das Alkenylgruppen enthaltende Polyorganosiloxan kann auch Einheiten der allgemeinen Formel -OSi(R²R³)R⁴Si(R²R³)O- enthalten, wobei sowohl R² als auch R³ die vorstehend für R und R¹ angegebene Bedeutung haben und R⁴ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Polyorganosiloxan (I) enthalten sein.

Besonders bevorzugt ist die Verwendung Vinylgruppen enthaltender Polydimethylsiloxane, deren Moleküle der Formel

(ViMe₂SiO_{1/2})₂(ViMeSiO)ₐ(Me₂SiO)_{b}

entsprechen, wobei a null oder eine nichtnegative Zahl und b eine nichtnegative Zahl ist und folgende Relationen erfüllt werden: 50<(a+b)<2200, vorzugsweise 200<(a+b)<1000.

Als Vernetzer wird Polyorganosiloxan (II) bei der Additionsvernetzung der erfindungsgemäßen Siliconkautschukmasse eingesetzt, das vorzugsweise ein SiH-funktionelles Polyorganosilo xan ist, das aufgebaut ist aus Einheiten der nachfolgenden Formel

H_{c}R¹ _{d}SiO_{(4-c-d)/2},

wobei c 0, 1 oder 2 ist, d 0, 1, 2 oder 3 ist, mit der Maßgabe, daß die Summe (c+d) < 4 ist und daß mindestens zwei siliciumgebundene Wasserstoffatome pro Molekül vorhanden sind und R¹ die oben dafür angegebene Bedeutung hat.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Polyorganosiloxans (II) enthält das Alkenylgruppen enthaltende Polyorganosiloxan (I) vorzugsweise mindestens drei Alkenylgruppen pro Molekül.

Das Polyorganosiloxan (II) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.% Wasserstoff.

Das Polyorganosiloxan (II) enthält vorzugsweise mindestens drei und vorzugsweise höchstens 600 Siliciumatome pro Molekül.

Besonders bevorzugt ist die Verwendung von SiH-Vernetzern, die zwischen 4 und 200 Siliciumatome pro Molekül enthalten.

Die Struktur des Polyorganosiloxans (II) kann linear, verzweigt, cyclisch oder netzwerkartig sein. Lineare und cyclische Polyorganosiloxane (II) sind aus Einheiten der Formel HR¹₂SiO_{1/2}, R¹₃SiO_{1/2}, HR¹SiO_{2/2} und R¹₂SiO_{2/2} zusammengesetzt, wobei R¹ die vorstehend dafür angegebene Bedeutung hat. Verzweigte und netzwerkartige Polyorganosiloxane (II) enthalten zusätzlich trifunktionelle Einheiten, wie HSiO_{3/2} und R¹SiO_{3/2}, und/oder tetrafunktionelle Einheiten der Formel SiO_{4/2}. Mit zunehmendem Gehalt an tri- und/oder tetrafunktionellen Einheiten weisen diese Vernetzungsmittel eine netzwerkartige, harzartige Struktur auf. Die im Polyorganosiloxan (II) enthaltenen organischen Reste R¹ werden üblicherweise so gewählt, daß diese mit den im Polyorganosiloxan (I) befindlichen organischen Resten verträglich sind, so daß die Bestandteile (I) und (II) mischbar sind.

Als Vernetzer können auch Kombinationen und Mischungen der hier beschriebenen Polyorganosiloxane (II) verwendet werden.

Besonders bevorzugte Polyorganosiloxane (II) haben die Formel

(HR¹ ₂SiO_{1/2})ₑ(R¹ ₃SiO_{1/2})_{f}(HR¹SiO_{2/2})_{g}(R¹ ₂SiO_{2/2})ₕ,

wobei die nichtnegativen ganzen Zahlen e, f, g und h folgende Relationen erfüllen: (e+f)=2, (e+g)>2, 5<(g+h)<200 und R¹ die oben dafür angegebene Bedeutung hat.

Das Polyorganosiloxan (II) ist vorzugsweise in einer solchen Menge in der härtbaren Siliconkautschukmasse enthalten, daß das Molverhältnis von SiH-Gruppen zu Alkenylgruppen vorzugsweise zwischen 0,5 und 5, bevorzugt zwischen 1,0 und 3,0, liegt.

Polyorganosiloxan II wird in Mengen von 0,1 bis 15 Gew.%, bevorzugt in Mengen von 2 bis 8 Gew.% und besonders bevorzugt 3 bis 6 Gew.% eingesetzt.

Der metallische Katalysator (IV), der vorzugsweise in Komponente (A) enthalten ist, dient für die Additionsreaktion (Hydrosilylierung) zwischen den Alkenylgruppen des Polyorganosiloxans (I) und den siliciumgebundenen Wasserstoffatomen des Polyorganosiloxans (II). In der Literatur wurden zahlreiche geeignete Hydrosilylierungskatalysatoren (IV) beschrieben. Prinzipiell können alle üblicherweise in additionsvernetzenden Siliconkautschukmassen eingesetzten Hydrosilylierungskatalysatoren verwendet werden.

Als Hydrosilylierungskatalysator (IV) können Metalle, wie Platin, Rhodium, Palladium, Ruthenium und Iridium, vorzugsweise Platin, die gegebenenfalls auf feinteiligen Trägermaterialien fixiert sind, eingesetzt werden.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂·C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Fein verteiltes Platin auf Trägermateralien wie Siliciumdioxid, Aluminiumoxid oder aktivierter Holz- bzw. Tierkohle, Platinhalogenide wie PtCl₄, Hexachloroplatinsäure und Na₂PtCl₄.nH₂O, Platin-Olefin Komplexe, z.B. solche mit Ethylen, Propylen oder Butadien, Platin-Alkohol Komplexe, Platin-Styrol Komplexe wie in U.S. 4 394 317 beschrieben, Platin-Alkoholat Komplexe, Platin-Acetylacetonate, Reaktionsprodukte aus Chloroplatinsäure und Monoketonen, z.B. Cyclohexanon, Methylethylketon, Aceton, Methyl-n-propylketon, Diisobutylketon, Acetophenon und Mesityloxid, als auch Platin-Vinylsiloxan Komplexe - die Platin-Vinylsiloxan Komplexe wurden z.B. in U.S. 3 715 334, 3 775 452 und 3 814 730 beschrieben-, wie Platin-divinyl-tetramethyldisiloxan Komplexe mit oder ohne nachweisbaren Mengen an anorganischem Halogen, in einer Menge, die ausreicht, um das Härten der Zusammensetzung bei einer Temperatur von Umgebungstemperatur bis 250°C zu fördern, wobei das Organohydrogensiloxan und der Hydrosilylierungskatalysator in verschiedenen Teilen der mehrteiligen härtbaren Zusammensetzung angeordnet sind, ist bevorzugt. Besonders bevorzugt sind Komplexe des Platins mit Vinylsiloxanen, wie sym-Divinyltetramethyldisiloxan.

Der Hydrosilylierungskatalysator (IV) kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt von Platin-Metall in der härtbaren Siliconkautschukmasse im Bereich von 0,1 bis 500 Gew.-ppm (ppm = Teile pro 1 Million Teile), vorzugsweise zwischen 10 und 100 Gew.-ppm Platin-Metall. Ansonsten wird der Katalysator gegebenenfalls zusammen mit einem Inhibitor vorzugsweise in Mengen von 0,01 bis 5 Gew.% eingesetzt.

Bei der erfindungsgemäßen Schwefelverbindung (III) handelt es sich um eine organische Schwefelverbindung, z.B. aus der Gruppe der Thiole (Mercaptane, wie z.B. Alkylthiole, Arylthiole, Mercaptoheterocyclen wie Mercaptoimidazole, Mercaptobenzimidazole), Keten-S,X-acetale, mit X bevorzugt gleich N oder S, Thioacetale, Thioamide, Thioharnstoffe, Thiurame (Thiurammono-, di- oder polysulfide, Bisthiocarbamoylmono-, di- oder polysulfane), Thiuroniumsalze, Thiocarbamate, Dithiocarbamate und deren Zn-, Fe-, Ni-, Co- oder Cu-Salze, Thiocyanate, Isothiocyanate, Thiocarbonylverbindungen (wie z.B. Thioaldehyde, Thioketone, Thiolactone, Thiocarbonsäuren), Thia-Heterocyclen (wie z.B. Thiophen, 1,2- oder 1,3-Dithiole bzw. 1,2- oder 1,3-Dithiol-thione, Thiazole, Mercaptothiazole, Mercaptothiadiazole, Benzo-dithiole bzw. Benzo-dithiol-thione, Benzthiazole, Mercaptobenzthiazole, Phenothiazine, Thianthrene), die Gegenwart eines Silans mit schwefelhaltigen funktionellen Gruppen, z.B. eines Mercaptoalkyl-alkyl-alkoxysilans der allgemeinen Formel (4),

(4) (R⁵O)₃₋ₙR⁶ ₙSi-R⁷-SH

eines Bis-(trialkoxysilyl-alkyl)mono-, di- oder polysulfans der allgemeinen Formel (5), eines Thiocyanatoalkyltrialkoxysilans der allgemeinen Formel (6), die Gegenwart eines Füllstoffes,

(5) [(R⁸O)₃Si-R⁹-]₂-Sₙ

(6) (R¹⁰O)₃Si-R¹¹-SCN

bevorzugt Kieselsäuren, auf den diese Silane mit schwefelhaltigen funktionellen Gruppen aufgebracht, umgesetzt oder abgemischt, wurden, z.B. hochdisperses Siliciumdioxid, und bzw. oder die Gegenwart eines thiofunktionellen Siloxans, z.B. eines Polydimethylsiloxan-co-mercaptoalkyl-, bevorzugt -ethyl- und -propyl-, siloxans in mindestens einem Teil der mehrteiligen Zusammensetzung, bevorzugt dem H-Siloxan haltigen Teil.

R⁵ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl.

R⁶ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Aryl- und Alkarylgruppen, wie Phenyl, Tolyl, Xylyl, Mesityl, Benzyl.

R⁷ stellt einen substituierten oder nichtsubstituierten, aliphatisch gesättigten, bivalenten Kohlenwasserstoffrest mit 1 bis 10 Kohlenstoffatomen, vorzugsweise 1 bis 6 Kohlenstoffatomen, dar. Beispiele hierfür sind die Alkylengruppen, wie vorzugsweise Methylen, Ethylen, Propylen, Butylen, Hexylen, Phenylen, besonders bevorzugt Propylen.
R⁸ und R¹⁰ haben die Bedeutung von R⁵.
R⁹, R¹¹ haben die Bedeutung von R⁷.
n hat die Bedeutung von n=1-10, bevorzugt n= 2 oder 4.

Es können auch Gemische dieser organischen Schwefelverbindungen eingesetzt werden.

Die organische Schwefelverbindung oder ihre Gemische werden in Mengen von 0,0001% - 2%, bevorzugt 0,001% - 0,2%, besonders bevorzugt 0,005 - 0,15 % bezogen auf das Gesamtgewicht der Zusammensetzung, eingesetzt.

In einer der Komponenten A oder B können auch die folgenden Zusätze enthalten sein.

Während die Bestandteile (I) bis (IV) notwendige Bestandteile der erfindungsgemäßen Siliconkautschukmasse sind, können wahlweise weitere Zusätze zu einem Anteil von bis zu 60 Gew.-%, vorzugsweise zwischen 1 und 20 Gew.-%, in der Siliconkautschukmasse enthalten sein. Diese Zusätze können z.B. Füllstoffe, Haftvermittler, Inhibitoren, Metallstäube, Fasern, Pigmente, Farbstoffe, Weichmacher usw. sein.

Beispiele für Füllstoffe sind verstärkende Füllstoffe, eines verstärkenden anorganischen, bevorzugt silikatischen, Füllstoffs wie z.B. hochdisperses Siliciumdioxid (Kieselsäure) mit spezifischen Oberflächen von 50 - 500 m²/g, bevorzugt 150 - 300 m²/g, die auch oberflächenmodifiziert sein können. Diese können hergestellt werden z.B. durch Ausfällung aus Lösungen von Silikaten mit anorganischen Säuren und durch hydrothermalen Aufschluß, durch hydrolytische und bzw. oder oxidative Hochtemperaturumsetzung von flüchtigen Siliciumhalogeniden oder durch ein Lichtbogenverfahren. Diese Kieselsäuren können gegebenenfalls auch als Mischoxide oder Oxidgemische mit den Oxiden der Metalle Aluminium, Magnesium, Calcium, Barium, Zink, Zirkon und/oder Titan vorliegen. Des weiteren können nicht verstärkende Füllstoffe, also Füllstoffe mit einer spezifischen Oberfläche nach BET von weniger als 50 m²/g, wie Quarzmehl, Diatomeenerde, Calciumsilikat, Zirkoniumsilikat, Zeolithe, Metalloxide, wie Eisenoxid, Zinkoxid, Titandioxid, Aluminiumoxid, Metallcarbonate, wie Calciumcarbonat, Magnesiumcarbonat, Zinkcarbonat, Metallsulfate, Glimmer, Siloxanharze, Tone, Lithophone Graphit und Kreide verwendet werden. Die genannten Füllstoffe können hydrophobiert sein. Synthetische Silikate, natürliche Silikate, Glasfasern und Glasfasererzeugnisse wie Matten, Stränge, Gewebe, Gelege und dergleichen sowie Mikroglaskugeln können verwendet werden. Vorzugsweise werden 10 bis 60%, bezogen auf das Gewicht der Zusammensetzung an Füllstoff zugegeben.

Ruß kann zusätzlich in den erfindungsgemäßen Kautschukmassen zugegen sein, nicht nur zur Grau- oder Schwarzfärbung der Vulkanisate, sondern auch zur Erzielung von besonderen, wertvollen Vulkanisationseigenschaften, wobei die bekannten Gummiruße vorgezogen werden. Der Ruß wird in Mengen von 0 bis 35 Gewichtsteilen, bezogen auf 100 Gewichtsteile Kautschuk, in mindestens einem Teil der mehrteiligen Zusammensetzung eingesetzt. Eine untere Grenze mit der Zahl Null bedeutet im Rahmen der vorliegenden Erfindung, daß der Mischungsbestandteil in der Kautschukmischung vorhanden sein kann, aber nicht muß. Wenn Ruß in einer Mischung zugegen ist, ist die untere Grenze praktisch bei 0,1 Gewichtsteilen anzusetzen.

Im Falle von ölausschwitzenden Elastomeren wird eine Menge von 0% bis 10% eines Füllstoffs, bevorzugt 0,1% bis 5%, bezogen auf das Gewicht der Zusammensetzung, eines Organoarylsiloxans, bevorzugt eines Polydimethyl-co-methylphenyl-siloxans hinzugegeben. Eine untere Grenze mit der Zahl Null bedeutet im Rahmen der vorliegenden Erfindung, daß der Mischungsbestandteil in der Kautschukmischung vorhanden sein kann, aber nicht muß. Wenn ein Organoarylsiloxan in einer Mischung zugegen ist, ist die untere Grenze praktisch bei 0,1 Gewichtsteilen anzusetzen.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPa·s bei 25°C.

Insbesondere können harzartige Polyorganosiloxane, die im wesentlichen aus Einheiten der Formeln R¹²₃SiO_{1/2}, R¹²SiO_{3/2} und/oder SiO_{4/2}, ggf. auch R¹²₂SiO_{2/2}, bestehen, bis zu einem Anteil von 50 Gew.-%, vorzugsweise bis zu 20 Gew.-%, bezogen auf das Gesamtgewicht des Siliconkautschuks, enthalten sein. Das Molverhältnis zwischen monofunktionellen und tri- oder tetrafunktionellen Einheiten dieser harzartigen Polyorganösiloxane liegt vorzugsweise im Bereich von 0,5 : : 1 bis 1,5 : 1. Es können auch funktionelle Gruppen, insbesondere Alkenylgruppen, in Form von R¹³R¹²₂SiO_{1/2}- und/oder R¹³R¹²SiO_{2/2}-Einheiten, enthalten sein.

R¹² stellt einen substituierten oder nichtsubstituierten, aliphatisch gesättigten, monovalenten Kohlenwasserstoffrest mit 1 bis 10 Kohlenstoffatomen, vorzugsweise bis 6 Kohlenstoffatomen, dar. Beispiele hierfür sind die Alkylgruppen, wie Methyl, Ethyl, Propyl, Butyl und Hexyl; Cycloalkylgruppen, wie Cyclopentyl, Cyclohexyl und Cycloheptyl; Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

R¹³ stellt eine Alkenylgruppe dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphane, Phosphite, Nitrile, Diaziridine und Oxime. Vorzugsweise können Siloxane, besonders bevorzugt 1,3-Divinyl-1,1,3,3-tetramethyl-disiloxan und Tetramethyl-tetravinylcyclotetrasiloxan verwendet werden.

Die Herstellung der erfindungsgemäßen Siliconkautschukmassen erfolgt vorzugsweise, indem in einem ersten Schritt der Füllstoff mit dem Alkenylgruppen enthaltenden Polyorganosiloxan (I) zu einem einheitlichen Gemisch vermischt wird. Die Einarbeitung des Füllstoffs in das Polyorganosiloxan erfolgt in einem geeigneten Mischer, z.B. einem Kneter.

Die Komponenten (A) und (B) werden in einem Gewichtsverhältnis von 10:1 bis 1:0,5, bevorzugt 1:1 verwendet.

Ein weiterer Gegenstand der Erfindung ist ein Verfahren bei dem Komponenete (A) mit Komponente (B) vermischt wird.

Die Komponenten (A) und (B) haben die gleiche Bedeutung wie oben definiert. Die Komponenten werden bei Raumtemperatur (25°C) und Normaldruck innig vermischt. Die Mischung wird anschließend in 0,01 bis 10 min, bevorzugt 0,02 bis 5 min bei erhöhter Temperatur 70°C - 250°C, bevorzugt bei 90°C - 180°C vulkanisiert.

Ein weiterer Gegenstand der Erfindung ist ein Formkörper, der erfindungsgemäße Massen oder nach dem erfindungsgemäßen Verfahren hergestellte Massen enthält, mit der Maßgabe, daß Kein N,N Dimethyldithiocarbamat, Thiocarbon säuse oder Thiuram- mono sulfid enthalten sind.

Die erfindungsgemäßen Formteile zeichnen sich dadurch aus, daß sie transparente, gegebenenfalls einfärbbare gummielastische Formteile mit guten bis sehr guten mechanischen Eigenschaften sind, die sich nach dem erfindungsgemäßen Verfahren wirtschaftlich herstellen lassen. Derartige Formteile lassen sich vorzugsweise durch Spritzgießen herstellen. Derartige Formteile weisen bei Deformation eine bleibende Verformung auf, den Druckverformungsrest. Diese Verformung ist insbesondere im produktionsfrischen Zustand, wenn also nicht nachgeheizt wird, besonders hoch. Für bestimmte Anwendungen, z.B. Dichtungen im Automobil- und Maschinenbausektor, wo häufig aus technischen oder Kostengründen kein Nachheizen der Teile, also ein Tempern, erfolgt, ist es essentiell, insbesondere bei ungetemperten Teilen einen möglichst niedrigen Druckverformungsrest zu realisieren. Dieses Ziel wird durch die Erfindung erreicht. Allerdings ist auch ein Tempern erfindungsgemäß möglich.

Überraschend ist insbesondere die gute Reproduzierbarkeit des Druckverformungsrests nach Lagerung, wenn die organische Schwefelverbindung in geringer Menge in der Komponente (B) enthalten ist. So ist die Vernetzungsgeschwindigkeit bei den erfindungsgemäßen Formteilen noch nach einer längeren Lagerzeit überraschend geringer als wenn die organische Schwefelverbindung in der Komponente (A) enthalten wäre. Dies ermöglicht eine Garantie von bis zu 6 Monaten Lagerstabilität auf das konfektionierte Produkt. Daher sind durch die gute Lagerstabilität kurze, konstante Vernetzungszeiten gegeben, die eine schnelle und kontinuierliche Produktion gewährleisten. Das bedeutet, die Verarbeitungsmaschinen müssen nicht immer wieder auf ansonsten durch die Lagerung bedingte längere Vernetzungszeiten nachjustiert werden, was zu erheblicher Kostenersparnis führt und es können aufgrund der kurzen Vernetzungszeit mehr Formteile produziert werden.

Die zu Elastomeren vernetzenden, vulkanisierten und ungetemperten Massen haben einen Druckverformungsrest von vorzugsweise kleiner 50, bevorzugt kleiner 25 und besonders bevorzugt kleiner 10, wobei ein Wert von überhaupt keinen Druckverformungsrest bedeutet. Der Druckverformungsrest wird nach DIN 53517 gemessen.

Charakteristisch für additionsvernetzende Siliconkautschuke ist, daß im Unterschied zur Peroxidvernetzung keine Vernetzerspaltprodukte freigesetzt werden. Additionsvernetzende Flüssigsiliconkautschuke weisen zudem im Vergleich zu Festsiliconkautschuken und anderen Elastomeren eine niedrige Viskosität auf. Diese günstige Konsistenz und das Vernetzungsprinzip führen zu zahlreichen Verarbeitungsvorteilen, insbesondere bei der kostengünstigen Herstellung kleiner Formteile mit großen Stückzahlen. Wesentlich für eine automatisierte Produktion ist eine Verarbeitung ohne Nachbehandlung, z.B. ohne Nachheizen (Tempern), der Formteile. Für eine Vielzahl von dichtungstechnischen Anwendungen, z.B. O-Ringe, Ventildeckeldichtungen, Dichtlippen, Dichtungen in Dialysatoren und Einwegspritzen, Spülkastendichtungen etc. ist ein niedriger Druckverformungsrest von Vorteil. Ölausschwitzende Siliconkautschuke erlauben leichte Montage und verhindern die Korrosion elektrischer Verbindungen durch äußere Einflülsse. Auch bei dieser Anwendung als z.B. weather packs bietet ein niedriger Druckverformungsrest neben hervorragenden anderen mechanischen Eigenschaften, wie hoher Reißfestigkeit und Reißdehnung, technische Vorteile. Aus den genannten Gründen ist der Gegenstand der Erfindung besonders interessant, da durch die beanspruchten schwefelhaltigen Additive ohne wesentliche Beeinflussung der übrigen mechanischen Eigenschaften und bzw. oder des Vernetzungsverhaltens der -Druckverformungsrest deutlich verbessert wird.

Den im Stand der Technik beschriebenen Verbindungen ist gemeinsam, daß es sich nicht um additonsvernetzende Zusammensetzungen handelt, die organische Schwefelverbindungen enthalten. In der Literatur wird schon vor geringsten Mengen an organischen Schwefelverbindungen bei additionsvernetzenden Systemen gewarnt, da diese den Katalysator in additionsvernetzenden Systemen vergiften. So auch "Ullmann Enzyklopädie der technischen Chemie", 4. Auflage, Band 21, Seite 525, Verlag Chemie, 1982, in der geschrieben steht, daß das Vulkanisationsverhalten von Additionssystemen durch Schwefelverbindungen empfindlich gestört wird, daher ist eine Verunreinigung durch solche Verbindungen peinlichst zu vermeiden. Des weiteren wird an folgenden Stellen in Lehrbüchern auf die Katalysatorvergiftung in Additionssystemen hingewiesen (W. Hechtl, Chemie und Technologie des kalthärtenden Siliconkautschuks, in Silicone, Chemie und Technologie, S. 49ff, Vulkan Verlag, 1989; Ullmanns Encyclopedia of Ind. Chem., 5. Aufl., Vol. A5, S. 323, Verlag Chemie 1993, Weinheim; Ullmanns Encyclopedia of Ind. Chem., 5. Aufl., Vol. A 24, S. 72, Verlag Chemie 1993, Weinheim; U11manns Enclyklopädie der technischen Chemie, 4. Aufl., Band 21, S. 522, 525, Verlag Chemie 1982, Weinheim).

### Beispiele:

### Beispiel 1: Herstellung eines mit Organoschwefelverbindungen modifizierten Füllstoffes

Zu 100 g pyrogenen Siliciumdioxids mit einer spezifischen Oberfläche nach-BET von 300 m²/g, erhältlich bei der Wacker-Chemie unter dem Namen "Wacker HDK T30", werden bei Raumtemperatur und Normaldruck unter Rühren feinstverteilt 10 g Wasser und anschließend feinstverteilt 12,24 g 3-Mercaptopropyl-trimethoxysilan, erhältlich bei der Wacker-Chemie unter dem Namen "Wacker Silan GF 70", eingemischt. Anschließend wird 1 Stunde bei 80°C getempert. Nach der Reinigung von Reaktionsnebenprodukten unter vermindertem Druck werden 106,1 g eines weißen Pulvers erhalten.

### Beispiel 2: Herstellung eines Batches zur Verbesserung des Druckverformungsrestes

In einem Kneter werden 43,3 Gew.-Teile vinylendgestopptes Polydimethylsiloxan mit einer Viskosität von 20 Pas mit 20 Gew.-Teilen eines mit Hexamethyldisilazan oberflächenmodifizierten pyrogen hergestellten Siliciumdioxids mit einer spezifischen Oberfläche von 300 m²/g nach BET gemischt und zu einer homogenen Masse verarbeitet. Zu dieser Mischung werden 10 Gew.-Teile eines modifizierten Füllstoffs nach Beispiel 1 gegeben und erneut 0,5 Stunden bei 120°C homogenisiert. Zum Abschluß werden 26,7 Gew.-Teile vinylendgestopptes Polydimethylsiloxan mit einer Viskosität von 20 Pas eingemischt.

### Beispiel 3: Herstellung eines Batches zur Verbesserung des Druckverformungsrestes

In 90 Gew.-Teile vinylendgestopptes Polydimethylsiloxan mit einer Viskosität von 20 Pas werden 10 Gew.-Teile Octadecan-1-thiol oberhalb dessen Schmelztemperatur eingerührt und zu einer homogenen Masse verarbeitet.

### Beispiel 4: Herstellung der Grundmischung eines Flüssigkautschuks

Herstellung der A-Komponente: In einem Kneter werden 82 Gew.-Teile vinylendgestopptes Polydimethylsiloxan mit einer Viskosität von 20 Pas mit 33 Gew.-Teilen oberflächenmodifizierten pyrogen hergestellten Siliciumdioxid mit einer spezifischen Oberfläche von 300 m²/g nach BET gemischt und zu einer homogenen Masse verarbeitet. Zu 100 Gew.-Teilen dieser Siliconbasismischung werden 0,19 g eines Platinkatalysators, bestehend aus 97 Gew.-Teilen eines Polydimethylsiloxans und 3 Gew.-Teilen eines Platin-divinyl-tetramethyldisiloxan-Komplexes, und 0,07 Gew.-Teile Ethinylcyclohexanol als Inhibitor gegeben und in einem Kneter homogenisiert. Herstellung der B-Komponente: In einem Kneter werden 82 Gew.-Teile vinylendgestopptes Polydimethylsiloxan mit einer Viskosität von 20 Pas mit 33 Gew.-Teilen oberflächenmodifiziertes pyrogen hergestelltes Siliciumdioxid mit einer spezifischen Oberfläche von 300 m²/g nach BET gemischt und zu einer homogenen Masse verarbeitet. Zu 100 Gew.-Teilen dieser Siliconbasismischung werden 4 Gew.-Teile eines Polydimethylsiloxan-co-hydrogenmethylpolysiloxans und 0,03 Gew.-Teile Ethinylcyclohexanol als Inhibitor gegeben und in einem Kneter homogenisiert.
Die erhaltenen härtbaren Silicongrundmassen A und B werden im Verhältnis 1:1 gemischt, zu Platten gepreßt und bei 170°C 10 Minuten vulkanisiert.
Aus den gehärteten Platten werden die Prüfkörper gemäß den angegebenen DIN-Vorschriften ausgeschnitten und geprüft.

### Beispiel 5: Herstellung eines ölausschwitzenden Flüssigkautschuks

Zu der A- und B-Komponente nach Beispiel 4 werden jeweils 2 Gew.-Teile eines Polydimethylsiloxan-co-methylphenylpolysiloxans gegeben und in einem Kneter vermischt.

Preßvulkanisation erfolgte analog Beispiel 4 in 5 Minuten bei 175°C.

### Beispiel 6:

Zu 100 Gew.-Teilen der B-Komponente nach Beispiel 4 mischt man 0,25 Gew.-Teile eines a,ω-Trimethylsiloxy-endständigen Polydimethyl/3-mercaptopropylsiloxans, hergestellt nach US Patent 4 046 795 analog Beispiel 11, mit einer Viskosität von ca. 0,25 Pas und einem SH-Gehalt von ca. 0,1 % und vulkanisiert wie in Beispiel 4.

### Beispiel 7:

Zu 100 Gew.-Teilen der B-Komponente nach Beispiel 5 wird 1 Gew.-Teil des Batches nach Beispiel 2 zugemischt, entsprechend ca. 0,1 Gew.-Teilen des modifizierten Füllstoffs nach Beispiel 1, und wie in Beispiel 5 vulkanisiert.

### Beispiel 8:

Zu 100 Gew.-Teilen der B-Komponente nach Beispiel 5 werden 0,50 Gew.-Teile des Batches nach Beispiel 3 zugemischt und wie in Beispiel 5 vulkanisiert.

### Verbesserung des Druckverformungsrestes bei Flüssigkautschuken:

| | Beispiel 4 | Beispiel 6 |
|---|---|---|
| Shore-Härte A | 51 | 49 |
| Reißfestigkeit [N/mm²] | 8 | 9,5 |
| Reißdehnung [%] | 460 | 540 |
| Weiterreißwiderstand [N/mm] | 28,9 | 32,9 |
| Rückprall [%] | 62 | 63 |
| Druckverformungsrest 22 h/175°C [%] | 62 | 45 |
| Anspringtemperatur [°C] | 120 | 120 |
| Vulkanisationszeit t 50 [sec] bei 170°C | 23 | 24 |
| Vernetzungsgesch windigkeit vmax [Nm/min] | 1,29 | 1,21 |

### Verbesserung des Druckverformungsrestes bei ölausschwitzenden Flüssigkautschuken:

| | Beispiel 5 | Beispiel 7 | Beispiel 8 |
|---|---|---|---|
| Shore-Härte A | 49 | 47 | 47 |
| Reißfestigkeit [N/mm²] | 9 | 7,9 | 8,8 |
| Reißdehnung [%] | 580 | 520 | 600 |
| Weiterreißwiderstand [N/mm] | 28 | 24,5 | 24,8 |
| Rückprall [%] | 61 | 60 | 56 |
| Druckverformungsrest 22 h/175°C [%] | 64 | 17 | 37 |
| Anspringtemperatur [°C] | 111 | 113 | 116 |
| Vulkanisationszeit t 50 [sec] bei 150°C | 18 | 17 | 26 |

DIN-Vorschriften:
DIN 53505 - Shore-Härte A
DIN 53504 - Reißfestigkeit, Reißdehnung
ASTM D 624 - Weiterreißwiderstand
DIN 53512 - Rückprall
DIN 53517 - Druckverformungsrest
DIN 53529 - Anspringtemperatur

## Patentansprüche

1. Zu Elastomeren vernetzbare Massen auf der Basis von Komponente (A), enthaltend Polyorganosiloxan (I) mit mindestens zwei Alkenylgruppen pro Molekül und einen metallischen Katalysator (IV)
und
Komponente (B), enthaltend Polyorganosiloxan (II) mit mindestens zwei siliciumgebundenen Wasserstoffatomen und organischer Schwefelverbindung (III) aus der Gruppe Alkyllthiole, Arylthiole, Mercaptoheterocyclen, Keten-S,X-acetale, mit X bevorzugt gleich N oder S, Thioacetale, Thioamide, Thioharnstoffe, Thiuramdi- oder polysulfide, Bisthiocarbamoylmono-, di- oder polysulfane, Thiuroniumsalze, Thiocarbamate, Dithiocarbamate und deren Zn-, Fe-, Ni-, Co-, Cu-Salze, Thiocyanate, Isothiocyanate, Thiocarbonylverbindungen, Thia-Heterocyclen, die Gegenwart eines Silans mit schwefelhaltigen funktionellen Gruppen, Fülltoffe, auf denen diese Silane mit schwefelhaltigen funktionellen Gruppen aufgebrächt, umgesetzt oder abgemischt, wurden oder die Gegenwart eines thiofunktionellen Siloxans und Gemische dieser organischen Schwefelverbindungen.

2. Zu Elastomeren vernetzende Massen nach Anspruch 1, **dadurch gekennzeichnet, daß** Komponente (B) noch zusätzlich Polyorganosiloxan (I) enthält.

3. Zu Elastomeren vernetzbare Massen nach einem der Ansprüche 1, oder 2, **dadurch gekennzeichnet, daß** die organische Schwefelverbindung 3-Mercaptopropyltrimethoxysilan, 3-Mercaptopropyl-triethoxysilan, polydimethylsiloxan-co-mercaptoalkylverbindung und/oder Octadecan-1-thiol ist.

4. Zu Elastomeren vernetzbare Massen nach einem oder mehreren der Ansprüche 1, 2 oder 3, **dadurch gekennzeichnet, daß** die organische Schwefelverbindung in Mengen von 0,0001 - 2 Gew.% bezogen auf das Gesamtgewicht der Masse enthalten ist.

5. Verfahren zur Herstellung von Massen nach einem oder mehreren der Ansprüche 1, 2, 3 oder 4, **dadurch gekennzeichnet, daß** Komponente (A) mit Komponente (B) vermischt wird.

6. Formkörper enthaltend Massen nach einem oder mehreren der Ansprüche 1, 2, 3 oder 4 oder hergestellt nach Anspruch 5, **dadurch gekennzeichnet, daß** der Formkörper ungetempert ist und mit der Maßgabe, daß kein N, N-Dimethyldithiocarbamat, Thiocarbonsäure oder Thiurammonoszulfide enthalten sind.

7. Zu Elastomeren vernetzbare Massen nach einem oder mehreren der Ansprüche 1 bis 4, oder hergestellt nach Anspruch 5, **dadurch gekennzeichnet, daß** die vulkanisierten, ungetemperten Massen einen niedrigen Druckverformungsrest haben.

## Claims

1. Compositions which can be crosslinked to give elastomers and are based on
component (A), comprising polyorganosiloxane (I) with at least two alkenyl groups per molecule and a metallic catalyst (IV)
and
component (B), comprising polyorganosiloxane (II) with at least two silicon-bonded hydrogen atoms and organic sulphur compound (III) selected from the group consisting of alkylthiols, arylthiols, mercaptoheterocycles, ketene-S, X-acetals, where X is preferably N or S, thioacetals, thioamides, thioureas, thiuram di- or polysulphides, bisthiocarbamoyl mono-, di- or polysulphanes, thiuronium salts, thiocarbamates, dithiocarbamates and their Zn, Fe, Ni, Co or Cu salts, thiocyanates, isothiocyanates, thiocarbonyl compounds, thia-heterocycles, the presence of a silane with sulphur-containing functional groups, fillers, onto which these silanes having sulphur-containing functional groups have been applied, or with which they have been reacted or blended, or the presence of a thio-functional siloxane, and mixtures of these organic sulphur compounds.

2. Compositions which crosslink to give elastomers, according to Claim 1, **characterized in that** component (B) additionally includes polyorganosiloxane (I).

3. Compositions which can be crosslinked to give elastomers, according to either of Claims 1 and 2, **characterized in that** the organic sulphur compound is 3-mercaptopropyltrimethoxysilane, 3-mercaptopropyltriethoxysilane, a polydimethylsiloxane-co-mercaptoalkyl compound and/or octadecane-1-thiol.

4. Compositions which can be crosslinked to give elastomers, according to one or more of Claims 1, 2 or 3, **characterized in that** the organic sulphur compound is present in amounts of from 0.0001 to 2% by weight, based on the weight of the entire composition.

5. Process for preparing compositions according to one or more of Claims 1, 2, 3 or 4, **characterized in that** component (A) is mixed with component (B).

6. Shaped article containing compositions according to one or more of Claims 1, 2, 3 or 4 or prepared according to Claim 5, **characterized in that** the shaped article has not been post-cured and with the proviso that N,N-dimethyldithiocarbamate, thiocarboxylic acid and thiuram monosulphides are not present.

7. Compositions which can be crosslinked to give elastomers, according to one or more of Claims 1 to 4, or prepared according to Claim 5, **characterized in that** the vulcanized compositions, which have not been post-cured, have a low compression set.

## Revendications

1. Matières réticulables en élastomères, à base d'un composant (A) contenant un polyorganosiloxane (I) comportant au moins deux groupes alcényle par molécule et un catalyseur métallique (IV)
et
d'un composant (B) contenant un polyorganosiloxane (II) comportant au moins deux atomes d'hydrogène liés au silicium, et un composé organique soufré (III) choisi dans le groupe constitué par les alkylthiols, les arylthiols, les mercaptohétérocycles, les cétène-S,X-acétals, X étant de préférence égal à N ou S, les thioacétals, les thioamides, les thiourées, les di- ou polysulfures de thiurame, les bisthiocarbamoylmono-, -di- ou -polysulfanes, les sels de thiuronium, les thiocarbamates, les dithiocarbamates et leurs sels de Zn, Fe, Ni, Co, Cu, les thiocyanates, les isothiocyanates, les composés thiocarbonyle, les thiahétérocycles, la présence d'un silane à groupes fonctionnels soufrés, des charges sur lesquelles ces silanes à groupes fonctionnels soufrés ont été appliqués, mis en réaction ou mélangés, ou la présence d'un siloxane thiofonctionnel, et des mélanges de ces composés organiques soufrés.

2. Matières réticulables en élastomères selon la revendication 1, **caractérisées en ce que** le composant (B) contient en outre un polyorganosiloxane (I).

3. Matières réticulables en élastomères selon la revendication 1 ou 2, **caractérisées en ce que** le composé organique soufré est le 3-mercaptopropyltriméthoxysilane, le 3-mercaptopropyltriéthoxysilane, un copolymère diméthylsiloxane/composé mercaptoalkyle et/ou l'ocadécane-1-thiol.

4. Matières réticulables en élastomères selon une ou plusieurs des revendications 1, 2 ou 3, **caractérisées en ce que** le composé organique soufré est contenu en proportions de 0,0001 à 2 % en poids, par rapport au poids total de la matière.

5. Procédé pour la préparation de matières selon une ou plusieurs des revendications 1, 2, 3 ou 4, **caractérisé en ce que** le composant (A) est mélangé avec le composant (B).

6. Corps moulés contenant des matières selon une ou plusieurs des revendications 1, 2, 3 ou 4 ou préparées selon la revendication 5, **caractérisés en ce que** le corps moulé est non traité thermiquement et étant entendu qu'aucun N,N-diméthyldithiocarbamate, acide thiocarboxylique ni monosulfure de thiurame n'est contenu.

7. Matières réticulables en élastomères selon une ou plusieurs des revendications 1 à 4, ou préparées selon la revendication 5, **caractérisées en ce que** les matières vulcanisées, non traitées thermiquement, ont une faible déformation permanente.
